Europäisches Patentamt

**European Patent Office**

**Office européen des brevets**

(19)

(11) Publication number: **0 042 718**
**A1**

(12) # EUROPEAN PATENT APPLICATION

(21) Application number: **81302715.8**

(22) Date of filing: **17.06.81**

(51) Int. Cl.³: **B 60 P 1/16**

(30) Priority: **19.06.80 AU 4104/80**

(43) Date of publication of application:
**30.12.81 Bulletin 81/52**

(84) Designated Contracting States:
**AT BE CH DE FR GB IT LI LU NL SE**

(71) Applicant: **HOCKNEY ENGINEERING PTY. LIMITED**
**2 Dupas Street**
**Smithfield New South Wales 2164(AU)**

(72) Inventor: **Dingle, John Trevor**
**41 Mt. William Street**
**Gordon New South Wales 2072(AU)**

(74) Representative: **JENSEN & SON**
**8 Fulwood Place High Holborn**
**London WC1V 6HG(GB)**

(54) **Tipping trailer for articulated vehicles.**

(57) A trailer (11) for an articulated vehicle, the trailer including a body (16) to be tilted so as to deliver a load contained within the body, a hoist (18) to raise the body, and linkages (19) joining the upper extremity of the hoist and the forward portion (23) of the body so that upon extension of the hoist, the body is caused to tilt.

FIG.3

EP 0 042 718 A1

Croydon Printing Company Ltd.

## "TIPPING TRAILER FOR ARTICULATED VEHICLES"

The present invention relates to articulated vehicles and more particularly but not exclusively to articulated vehicles having a tipping trailer.

The use of hydraulic hoists is well known in the manufacture of vehicles having a tipping load receiving body, however, their mounting has always included the use of a hoist well which projects into the load receiving area of the trailer. This is detrimental since it reduces the volume of the load receiving area, while additionally it inhibits the stacking of modules on the trailer. It should be appreciated that in most instances such trailers are used to convey granular material.

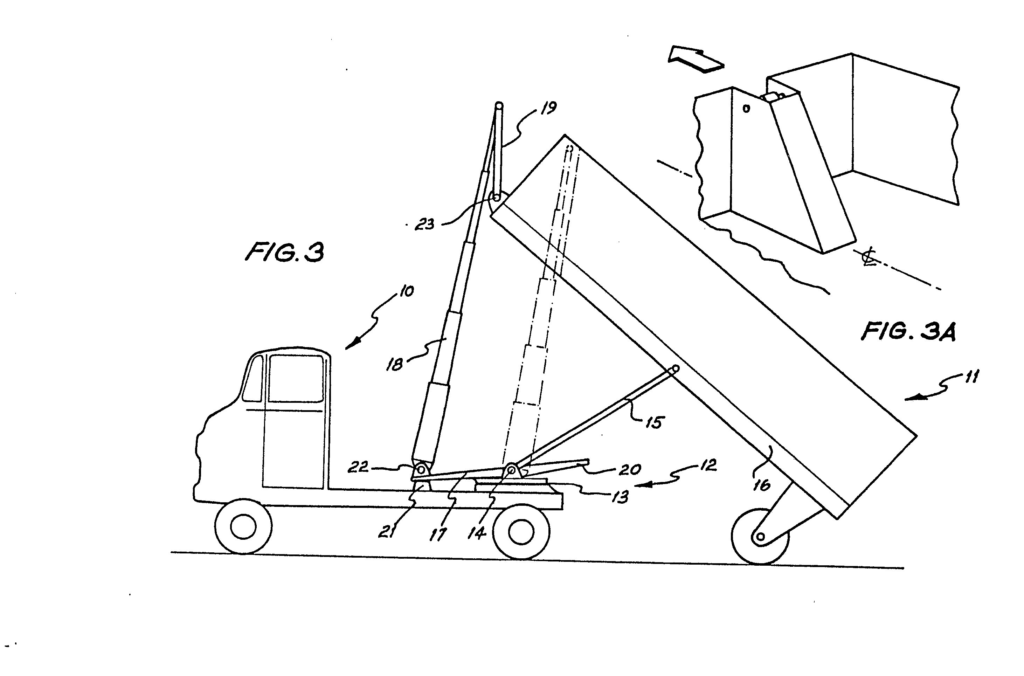

A conventional hoist arrangement is depicted in Figure 3 of the accompanying drawings, with the hoist and cut-out portion of the body drawn in dashed lines.

It is an object of the present invention to overcome or substantially ameliorate the above disadvantages.

There is disclosed herein a trailer for an articulated vehicle, said trailer including a hollow load receiving body to be tilted so as to deliver a load contained within the body, a hoist to raise said body, and linkage means extending between the top of the hoist and a portion of the body so that upon extension of the hoist said body is caused to tilt about a generally horizontal axis.

There is further disclosed herein an articulated vehicle comprising:

(a)   a prime mover having a turntable forming part of the fifth wheel assembly;

(b)   a trailer adapted to be tilted about a generally transverse horizontal axis located adjacent the rear of the trailer so that a load may be delivered by the trailer;

(c)   a hoist pivotally attached to the turntable so as to be pivotable about a generally transverse horizontal axis; and

(d)   a linkage horizontally pivotally coupled to the upper extremity of the hoist and a forward portion of the trailer so that upon the hoist being extended the trailer is caused to pivot about the rear horizontal axis.

A preferred form of the present invention will now be described by way of example with reference to the accompanying drawings, wherein:

Figure 1 schematically illustrates a prime mover and tiltable trailer connected thereto with the trailer in a non-tilted position;

Figure 2 schematically depicts the prime mover and trailer of Figure 1 with the trailer being initiated to move to a tilted position;

Figure 3 schematically depicts the prime mover and trailer of Figure 1 with the trailer fully tilted, while there is further schematically illustrated in ghost lines a conventional hoist system; and

Figure 3A schematically illustrates a hoist well used in conventional tipping trailers.

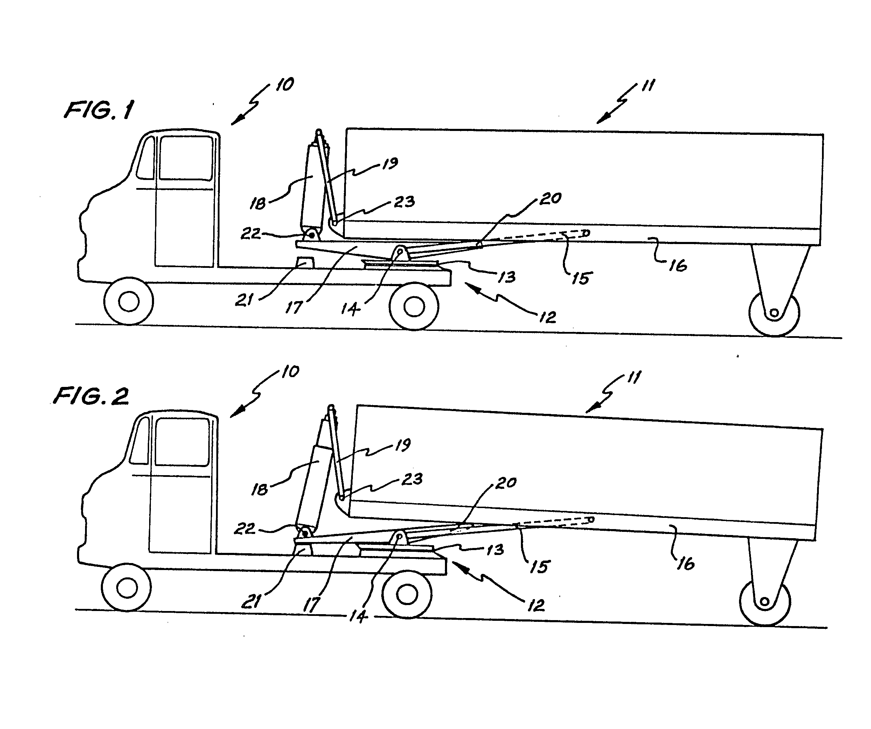

In Figure 1 the prime mover 10 is coupled to a tipping trailer 11 by substantially a conventional fifth wheel arrangement 12. The fifth wheel arrangement includes a turntable 13 to allow relative pivoting between the prime mover 10 and trailer 11 about a vertical axis. Additionally, there is provided a pivot 14 which permits relative pivoting between the prime mover 10 and trailer 11 about a generally horizontal axis. Extending from the pivot 14 are draw bars 15 which are pivotally attached at one end of the body 16 of the trailer 11. Also coupled to the turntable is a lever 17 by means of a pivot generally coaxial with the pivot 14. Pivotally attached to the forward end of the lever 17 is a hydraulic hoist 18 which is extendable to tilt the body 16 to displace the load contained therein.

The hoist 18 is attached to the forward end of the body 16 by means of straps 19. The straps 19 are pivotally attached to the top of the hoist 18 and the body 16. The lever 17 also extends rearwardly so as to have a rear part 20 which extends beneath the body 16.

As can be seen more particularly in Figure 2, as the hoist is actuated, the lever 17 is caused to pivot anticlockwise so as to engage resilient abutment 21, while additionally the rear part 20 is caused to pivot upward so as to initiate tilting of the body 16. Upon the lever 17 engaging the abutment 21, the hoist 18 has a firm reaction point, and accordingly extends taking with it the straps 19 and the front of the body 16 to thereby cause tilting. The lever 17 must possess sufficient stress to withstand bending about the axis of the pivot 14, while additionally must have sufficient torsional strength to resist twisting about a generally longitudinal axis to thereby enable it to support the hoist 18.

Because of the close proximity of the pivots 22 and 23, when the trailer 11 is not in a tilted position, the hoist 18 is unstable in a fore and aft direction. In this particular embodiment, the pivots 22 and 23 are positioned so that the hoist 18 leans back upon the front wall of the trailer when not in operation. To further provide stability of the hoist 18 there could be provided a cradle on the front portion of the body 16 to engage the hoist 18, while further to this there could be provided a clip arrangement by means of a pin which could engage an eyelet on the hoist 18 to thereby fix it to the body 16. The pin could be arranged with a linkage for its easy removal.

0042718

- 4 -

CLAIMS

1. A trailer for an articulated vehicle, said trailer including a hollow load receiving body to be tilted so as to deliver a load contained within the body, a hoist to raise said body, and linkage means extending between the top of the hoist and a portion of the body so that upon extension of the hoist said body is caused to tilt about a generally horizontal axis.

2. An articulated vehicle comprising:

(a) a prime mover having a turntable forming part of the fifth wheel assembly;

(b) a trailer adapted to be tilted about a generally transverse horizontal axis located adjacent the rear of the trailer so that a load may be delivered by the trailer;

(c) a hoist pivotally attached to the turntable so as to be pivotable about a generally transverse horizontal axis; and

(d) a linkage horizontally pivotally coupled to the upper extremity of the hoist and a forward portion of the trailer so that upon the hoist being extended the trailer is caused to pivot about the rear horizontal axis.

3. The vehicle of claim 2 further including a draw bar extending between the trailer and the prime mover, a longitudinally extending lever pivotally coupled intermediate its ends to said turntable so as to be pivotable about a generally horizontal transverse axis, and wherein said hoist is pivotally coupled to the forward end of said lever, and said lever at its rear end bears against said trailer to initiate lifting thereof upon the extension of said hoist.

4. An articulated vehicle substantially as hereinbefore described with reference to the accompanying drawings.

FIG. 1

FIG. 2

1/2

0042718

FIG. 3

FIG. 3A

10

11

12

13

14

15

16

17

18

19

20

21

22

23

0042718

European Patent
Office

**EUROPEAN SEARCH REPORT**

Application number

EP 81 30 2715.8

## DOCUMENTS CONSIDERED TO·BE RELEVANT

| Category | Citation of document with indication, where appropriate, of relevant passages | Relevant to claim |
|---|---|---|
| | GB - A - 1 269 462 (NEVILLE INDUSTRIES) <br> * page 1, line 85 to page 2, line 8; fig. * <br> -- | 1-3 |
| | GB - A - 1 199 274 (NEVILLE) <br> * page 3, lines 4 to 13; fig. 1, 2, 5 * <br> -- | 1-3 |
| | DE - A1 - 2 834 445 (JOURDAN) <br> * page 12 to page 14, line 15; fig. 1, 2 * <br> -- | 1-3 |
| A | CH - A5 - 562 711 (PERSSON) <br> -- | |
| A | US - A - 3 459 451 (HOY) <br> -- | |
| A | US - A - 1 634 255 (DRATH) <br> ---- | |

CLASSIFICATION OF THE APPLICATION (Int. Cl.³)

B 60 P 1/16

TECHNICAL FIELDS SEARCHED (Int. Cl.³)

B 60 P 1/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 02-09-1981 | LUDWIG |

EPO Form 1503.1 06.78